# EUROPÄISCHE PATENTSCHRIFT

(11) **EP 1 413 477 B1**
(45) Veröffentlichungstag und Bekanntmachung des Hinweises auf die Patenterteilung: **16.09.2009**
(21) Anmeldenummer: 03024418.0
(22) Anmeldetag: 23.10.2003
(51) Int. Cl.: B60P 1/48, B60P 1/64

(54) **Vorrichtung und Verfahren zum Wechseln von Schüttgut-Mulden**
Method and device for changing skips
Dispositif et procédé pour échanger des bennes

(30) Priorität: 25.10.2002 DE 10250852; 27.05.2003 DE 10325373
(43) Veröffentlichungstag der Anmeldung: 28.04.2004
(73) Patentinhaber: Herwig, Thomas, 70825 Korntal (DE)
(72) Erfinder: Herwig, Thomas, 70825 Korntal (DE)
(74) Vertreter: WOLF & LUTZ

(56) Entgegenhaltungen:
- WO-A-00/21788
- WO-A-02/49876
- DE-A- 3 731 599
- DE-A- 19 526 605
- DE-U- 29 505 271
- US-A- 4 943 203
- US-A- 5 816 764

## Beschreibung

Die Erfindung betrifft eine Vorrichtung zum Wechseln von Schüttgut-Mulden gemäß dem Oberbegriff des Patentanspruchs 1.

Eine, Vorrichtung dieser Art ist durch die DE 195 26 605 A1 bekannt.

Das Wechseln von Schüttgut-Mulden, also das Abladen einer auf einer Ladefläche eines Fahrzeugs befindlichen Schüttgut-Mulde und das Aufladen einer anderen Schüttgut-Mulde, ist ein zeitaufwendiger Vorgang mit mehreren Arbeitsgängen. Insbesondere das Rangieren zwischen den Auf- und Abladevorgängen ist aufwendig und führt in der Arbeitspraxis zu häufigen Unfällen und verschlingt darüber hinaus Zeit und belastet die Umwelt.

Für spezielle Anwendungsbereiche gibt es Vorrichtungen, die ein Auf- und Abladen von Mulden in einem Arbeitsgang erlauben. So wird in DE 37 31 599 A1 eine, speziell auf die Erfordernisse des Bergbaus, insbesondere auf die beengten Raumverhältnissen des Untertagebaus angepasste Vorrichtung beschrieben, mit der das Auf- und Absetzten einer Mulde in einem Arbeitsgang möglich ist. Hier wird eine auf einem Fahrzeug befindliche leere Mulde mittels einer Vorrichtung angehoben und in der angehobenen Stellung arretiert. Dann wird eine volle Mulde, die sich auf dem Boden hinter dem Fahrzeug befindet, mittels einer Zugeinrichtung auf das Fahrzeug gezogen. Die volle Mulde wird aus ihrer oberen Stellung abgesenkt und hinter dem Fahrzeug abgesetzt. Nachteil des bekannten Systems ist, dass es speziell auf die Bedingungen unter Tage zugeschnitten ist, das heißt, es werden spezielle Transportbehälter und spezielle Transportfahrzeuge benötigt. Verfahren und Vorrichtung sind nicht mit handelsüblichen Mulden nach DIN 30720 und DIN 30735 anwendbar. Außerdem sind die Durchführung der Verfahrensschritte bei Einsatz von Lastkraftwagen mit einer üblichen Ladeflächenhöhe von 1.5 m unmöglich. DE 37 31 599 A1 bezieht sich auf Spezialanhänger mit einer Ladeflächenhöhe von wenigen Zentimetern.

Aufgabe der Erfindung ist es, eine Vorrichtung der eingangs genannten Art zu entwickeln, die unter Einsatz handelsüblicher Lastkraftwagen mit Muldenabsetzaufbau und mit gebräuchlichen Mulden, das Wechseln von Schüttgut-Mulden in einem Arbeitsgang erlaubt.

Gelöst wird diese Aufgabe durch die Vorrichtung zum Wechseln von Schüttgut-Mulden mit den Merkmalen des Anspruchs 1. Einer ersten Schüttgut-Mulde ist eine Hubarmvorrichtung und einer zweiten Schüttgut-Mulde ist eine Verlagerungsvorrichtung zugeordnet. Die Verlagerungsvorrichtung umfasst eine Längsverlagerungsvorrichtung und eine Höhenverlagerungsvorrichtung.

Zu Beginn des Wechselvorgangs ist die erste Schüttgut-Mulde außerhalb der Ladefläche des Fahrzeugs angeordnet und die zweite Schüttgut-Mulde auf der Ladefläche des Fahrzeugs.

Der Vorteil einer solchen Vorrichtung besteht darin, dass jede der beiden Schüttgut-Mulden durch eine separate Vorrichtung aufgenommen und räumlich verlagert werden kann. Somit können sich zur gleichen Zeit zwei Schüttgut-Mulden auf dem Fahrzeug befinden.

Die erste Schüttgut-Mulde kann von deren Lagerplatz aufgenommen werden, verbleibt an der ihr zugeordneten Hubarmvorrichtung, der Lagerplatz ist frei, und ohne Ortswechsel des Fahrzeugs kann die erste Schüttgut-Mulde auf den freigewordenen Lagerplatz abgeladen werden. Dies ist dadurch realisierbar, dass die Verlagerungsvorrichtung eine Längs- und eine Höhenverlagerungsvorrichtung umfasst. Das aufwendige Rangieren zwischen Ab- und Aufladevorgang entfällt.

Ein zusätzlicher Vorteil der Vorrichtung besteht darin, dass Standard-Fahrzeuge, wie beispielsweise Muldenabsetzkipper, die zum Transport von Schüttgut-Mulden eingesetzt werden, mit der Verlagerungsvorrichtung einfach nachgerüstet werden können und dann das Wechseln der Schüttgut-Mulden in einem Arbeitsgang durchführen können.

Ein weiterer Vorteil der Verlagerungsvorrichtung besteht darin, dass die aufzuladende Schüttgut-Mulde stets in einer horizontalen Position verbleibt, so dass keine Ladung verloren geht.

Bei einer bevorzugten Ausführungsform sind die Längsverlagerungsvorrichtung und die Höhenverlagerungsvorrichtung unabhängig voneinander steuerbar. Dies bringt den Vorteil der Flexibilität des Abladevorgangs, weil die Abläufe Längsverlagerung und Höhenverlagerung in beliebiger Schrittfolge kombiniert werden können. Dadurch erlaubt die Verlagerungsvorrichtung ein sehr genaues Absetzen der Schüttgut-Mulde an einen Lagerplatz. Dies kann beispielsweise ein vorher genau festgelegter Lagerplatz sein, der sich nicht auf dem Boden befinden muss. Der Lagerplatz kann auch in einer gewissen Höhe angeordnet sein. Mittels der Längsverlagerungsvorrichtung kann die Schüttgut-Mulde zuerst auf dem Höhenniveau der Ladefläche an eine Position außerhalb der Ladefläche des Fahrzeugs verlagert werden und dann auf einem Lagerplatz, der sich auf einer anderen Höhe befindet, abgesetzt werden. Dieser Ort kann sowohl tiefer, als auch höher liegen im Vergleich zur aktuellen Höhe der Ladefläche des Fahrzeugs.

Bei einer weiteren bevorzugten Ausführungsform umfasst die Längsverlagerungsvorrichtung einen entlang der Ladefläche auf Führungsschienen verlagerbaren Schlitten und die Höhenverlagerungsvorrichtung einen daran befestigten nach unten und oben ausfahrbaren Hubmasten. Der Vorteil dieser Ausführungsform liegt in der stabilen Ausführung des Schlittens und des Hubmasten.

Bei einer weiteren bevorzugten Ausführungsform weist der Hubmast einen Hubrahmen mit in einem Abstand zueinander angeordneten Längsholmen auf, deren Abstand zueinander einstellbar ist. Der Vorteil dieser Ausführungsform liegt darin, dass die Schüttgut-Mulde mittels der Längsholme von der Ladefläche angehoben werden kann.

Bei einer weiteren Ausführungsform der Vorrichtung ist der Hubmast durch hydraulische oder pneumatische Zylinder oder elektrische oder mechanische Antriebe entlang der Führungsschienen verfahrbar. Dies hat gegenüber einer manuellen Steuerung den Vorteil der genaueren Steuerung der Höhenposition des Hubmasten.

Bei einer weiteren Ausführungsform weisen die Längsholme einen Verriegelungsmechanismus auf, der vorzugsweise mittels Nocken, Keilen oder Spindeln betätigbar ist. Der Vorteil dieser Ausführungsform liegt darin, dass die Schüttgut-Mulde fixieret ist und so gegen Verrutschen und Herunterfallen während des Verlagerungsvorgangs gesichert ist. Somit ist die Sicherheit während des Verlagerungsvorgangs erhöht.

Weiter wird auch eine Vorrichtung zum Wechseln von Schüttgut-Mulden vorgeschlagen, sich dadurch aus zeichnet, dass die Längsverlagerungsvorrichtung mindestens eine Profilschiene und mindestens eine Längsschiene umfasst. Der Vorteil dieser Vorrichtung liegt in der einfachen Ausgestaltung der Längsverlagerungsvorrichtung mit mindestens einer Profilschiene mit darin bewegbarer Längsschiene und der einfachen Montierbarkeit der Profilschiene auf einem Fahrzeug.

Bei einer bevorzugten Ausführungsform der Vorrichtung weist die Höhenverlagerungsvorrichtung ein mit der Längsverlagerungsvorrichtung zusammenwirkendes Stellelement auf mittels dessen die Profilschiene um die Drehachse der Hubarmvorrichtung oder um eine separate Drehachse schwenkbar ist. Der Vorteil dieser Ausführungsform liegt darin, dass die Längsverlagerungsvorrichtung um die Drehachse geschwenkt werden kann und keine separate Vorrichtung zur Höhenverlagerungsvorrichtung erforderlich ist. Die technische Ausgestaltung der Verlagerungsvorrichtung ist somit wesentlich einfacher und auch kostengünstiger.

Bei einer weiteren Ausführungsform weist die Verlagerungsvorrichtung mindestens zwei Profilschienen und mindestens zwei Längsschienen auf, wobei jeweils eine Profilschiene und eine Längsschiene an jeder Längsseite der Ladefläche des Fahrzeugs angeordnet ist und die beiden Profilschienen mit der Drehachse der Hubarmvorrichtung schwenkbar verbunden sind. Der Vorteil dieser Ausführungsform liegt drin, dass der Aufbau der Längsverlagerungsvorrichtung, bestehend aus zwei Profilschienen und zwei Längsschienen, stabiler ausgeführt ist.

Bei einer weiteren Ausführungsform ist jeweils die Längsschiene in der Profilschiene entlang der Ladefläche verlagerbar. Der Vorteil dieser Ausführungsform liegt in der flexiblen Längenausführung der Längsverlagerungsvorrichtung durch die Verschiebbarkeit der Längsschienen in den Profilschienen.

Bei einer weiteren Ausführungsform sind mindestens zwei Längsschienen mittels mindestens eines Querträgers verwindungssicher verbunden. Der Vorteil dieser Ausführungsform liegt darin, dass mit zwei Längsschienen mittels mindestens eines Querträgers, ein Transportschlitten gebildet wird, auf dem die Schüttgut-Mulde ruht. Die Schüttgut-Mulde ist somit, sobald sie auf die Ladefläche des Fahrzeugs gebracht wird, auf dem Transportschlitten angeordnet und muss nicht durch einen zusätzlichen Arbeitsgang mit der Längsverlagerungsvorrichtung und der Höhenverlagerungsvorrichtung in Wirkverbindung gebracht werden.

Weitere Ausgestaltungen der Vorrichtung sind den weiteren Unteransprüchen zu entnehmen.

Es wird auch eine Vorrichtung zum Wechseln von Schüttgut-Mulden vorgeschlagen, die die Merkmale des Anspruchs 7 aufweist. Sie zeichnet sich durch eine Längsverlagerungsvorrichtung mit einer Teleskoparmvorrichtung und einem Verschiebemittel aus. Vorteil der Vorrichtung ist, dass die Teleskoparmvorrichtung nicht auf der Ladefläche angeordnet ist.

Eine bevorzugte Ausführungsform zeichnet sich dadurch aus, dass die Höhenverlagerungsvorrichtung ein vorzugsweise mit der Längsverlagerungsvorrichtung zusammenwirkendes Stellelement aufweist, mittels dessen die Teleskoparmvorrichtung um die Drehachse der Hubarmvorrichtung oder um eine separate Drehachse schwenkbar ist.

Aufgabe der Erfindung ist es auch, ein Verfahren, welches unter den Rahmenbedingungen des Einsatzes handelsüblicher Lastkraftwagen mit Muldenabsetzaufbau und dem Einsatz gebräuchlicher Mulden, welche europaweit millionenfach im Einsatz sind, zu schaffen.

Es wird auch ein Verfahren vorgeschlagen, welches sich durch die im Folgenden zusammengefassten Schritte aus zeichnet. Die Ausgangssituation zu Beginn des Verfahrens ist die Folgende: Einer ersten Schüttgut-Mulde ist eine Hubarmvorrichtung, die eine an einer Ladefläche eines Fahrzeugs angeordnete Drehachse aufweist, zugeordnet, einer zweiten Schüttgut-Mulde eine Verlagerungsvorrichtung. Zu Beginn des Verfahrens befindet sich die erste Schüttgut-Mulde außerhalb der Ladefläche des Fahrzeugs während sich die zweite Schüttgut-Mulde auf der Ladefläche des Fahrzeugs befindet.

Das Fahrzeug wird an die aufzuladende Schüttgut-Mulde herangefahren. Vorzugsweise wird das Fahrzeug gesichert, insbesondere wird sichergestellt, dass das Fahrzeug in einer horizontalen Lage steht.

Die erste Schüttgut-Mulde wird aufgenommen und angehoben, wobei die angehobene Position sich so hoch über der Ladefläche befindet, dass die zweite Schüttgut-Mulde unterhalb der ersten Schüttgut-Mulde hindurch bewegbar ist, die erste Schüttgut-Mulde also in eine Freigabeposition gebracht wird.

In dem nächsten Verfahrensschritt wird die zweite Schüttgut-Mulde in eine Position außerhalb der Ladefläche des Fahrzeuges durch die Längsverlagerungsvorrichtung gebracht, ohne dass die Position der ersten Schüttgut-Mulde verändert wird. Dies geschieht, indem die zweite Schüttgut-Mulde unterhalb der ersten Schüttgut-Mulde hindurch bewegt wird.

Im nächsten Verfahrensschritt wird die zweite Schüttgut-Mulde außerhalb der Ladefläche des Fahrzeuges abgesetzt, wobei hier die Höhenverlagerungsvorrichtung verwendet wird.

In einem nächsten Verfahrensschritt werden die Längsverlagerungsvorrichtung und die Höhenverlagerungsvorrichtung in ihre Ausgangsposition zurückgefahren.

Im nächsten Verfahrensschritt wird die erste Schüttgut-Mulde auf die Ladefläche des Fahrzeugs abgesenkt.

Der Vorteil dieses Verfahrens besteht darin, dass eine erste Schüttgut-Mulde, die sich außerhalb des Fahrzeugs befindet, zuerst angehoben wird und somit den Platz für die abzuladende zweite Schüttgut-Mulde freigibt. Diese wird dann mittels der Verlagerungsvorrichtungen von der Ladefläche des Fahrzeuges auf diesen Platz befördert, wobei sich die aufzuladende Schüttgut-Mulde während des gesamten Wechselvorgangs an der Hubarmvorrichtung des Fahrzeugs befindet.

Der Vorteil dieses Verfahrens liegt auch darin, dass kein zusätzlicher Platz für die auf der Ladefläche des Fahrzeugs befindliche zweite Schüttgut-Mulde notwendig ist und dass das Verfahren in einem Arbeitsgang ohne Rangieren des Fahrzeuges zwischen An- und Aufladen der Schüttgut-Mulden durchgeführt werden kann. Das Hin- und Herrangieren war bei dem Ab- und Aufladevorgang von Mulden immer eine Ursache für Unfälle. Die Durchführung des Verfahrens in der beschriebenen Art und Weise ist dadurch möglich, dass die Verlagerungseinrichtung, die der zweiten Schüttgut-Mulde zugeordnet ist, unabhängig voneinander Längs- und Höhenverlagerungen durchführen kann, dass also die Längsverlagerung entkoppelt ist von einer Höhenverlagerung und nacheinander beide Verlagerungen durchgeführt werden können. Die beschriebenen Vorrichtungen zur Verlagerung sind auch einfach auf eine Ladefläche eines Fahrzeugs nachzurüsten. Die Hubarmvorrichtung ist eine konventionelle Hubarmvorrichtung mit Teleskoparmen, wie sie auf bekannten Fahrzeugen, insbesondere Muldenabsetzkippern standardmäßig vorhanden ist. Somit ist die Verlagerungsvorrichtung eine kostengünstige Nachrüsteinrichtung für ein konventionelles Muldentransportfahrzeug.

Die Erfindung wird im Folgenden anhand der Zeichnungen näher erläutert. Es zeigen:
- Figur 1: ein Fahrzeug mit einer Hubarmvorrichtung und einer Verlagerungsvorrichtung,
- Figur 2: ein erstes Ausführungsbeispiel einer Verlagerungsvorrichtung für Schüttgut-Mulden mit Längsverlagerungsvorrichtung und Höhenverlagerungsvorrichtung,
- Figur 3: ein zweites Ausführungsbeispiel einer Längs- und Höhenverlagerungsvorrichtung für Schüttgut-Mulden,
- Figur 3a: ein drittes Ausführungsbeispiel einer Längs- und Höhenverlagerungsvorrichtung für Schüttgut-Mulden,
- Figur 4: eine Darstellung des Verfahrens zum Wechseln von zwei Schüttgut-Mulden,
- Figur 5: einen Verfahrensablauf zur Längs- und Höhenverlagerung mit der Vorrichtung nach Figur 3.

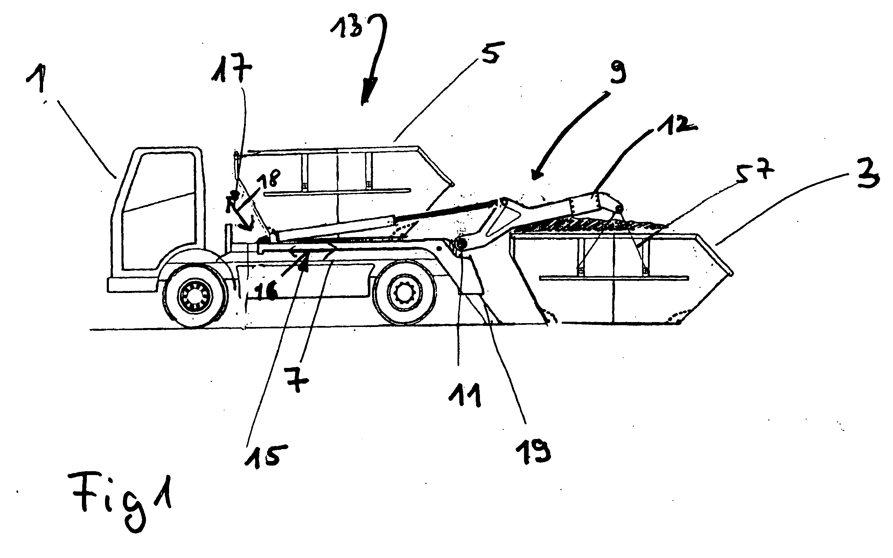

In Figur 1 ist ein Fahrzeug 1 zum Wechseln von Schüttgut-Mulden gezeigt. Dargestellt ist eine erste Schüttgut-Mulde 3, die sich außerhalb des Fahrzeugs 1 befindet und eine zweite Schüttgut-Mulde 5, die auf einer Ladefläche 7 des Fahrzeugs 1 angeordnet ist. Das Fahrzeug 1 weist eine der ersten Schüttgut-Mulde 3 zugeordnete Hubarmvorrichtung 9 auf, die mit dem Fahrzeug 1, hier mit der Ladefläche 7 des Fahrzeugs 1, auf einer Drehachse 11 gelagert ist. Hierbei handelt es sich vorzugsweise um eine Hubarmvorrichtung 9 mit Teleskoparmen, wie sie standardmäßig auf Fahrzeugen zum Transport von Mulden vorgesehen ist. Der Hubarm 12 der Hubarmvorrichtung 9 ist an einer Drehachse 11 schwenkbar angebracht. Auf der Ladefläche 7 des Fahrzeugs 1 ist ferner eine Verlagerungseinrichtung 13 zu erkennen, die eine Längsverlagerungsvorrichtung 15 und eine Höhenverlagerungsvorrichtung 17 umfasst. Beide sind schematisch durch die Pfeile 16 und 18 angedeutet. Das Fahrzeug 1 weist ferner eine in der Regel standardmäßig vorgesehene Stützvorrichtung 19 auf, mit der das Fahrzeug gesichert werden kann, das heißt einen festen Stand erfährt. Vorzugsweise können ein rechter und ein linker Fuß der Stützvorrichtung 19 unabhängig voneinander ausgefahren werden.

Insgesamt wird hier vorzugsweise davon ausgegangen, dass das Fahrzeug 1 einen üblichen Absetzkipperaufbau aufweist, nämlich eine Ladefläche 7, eine Hubarmvorrichtung 9 und eine Stützvorrichtung 19.

Bei den Schüttgut-Mulden 3 und 5 handelt es sich vorzugsweise um Schüttgut-Mulden, die entsprechend der DIN-Normen 30720 und 30735 ausgestaltet sind.

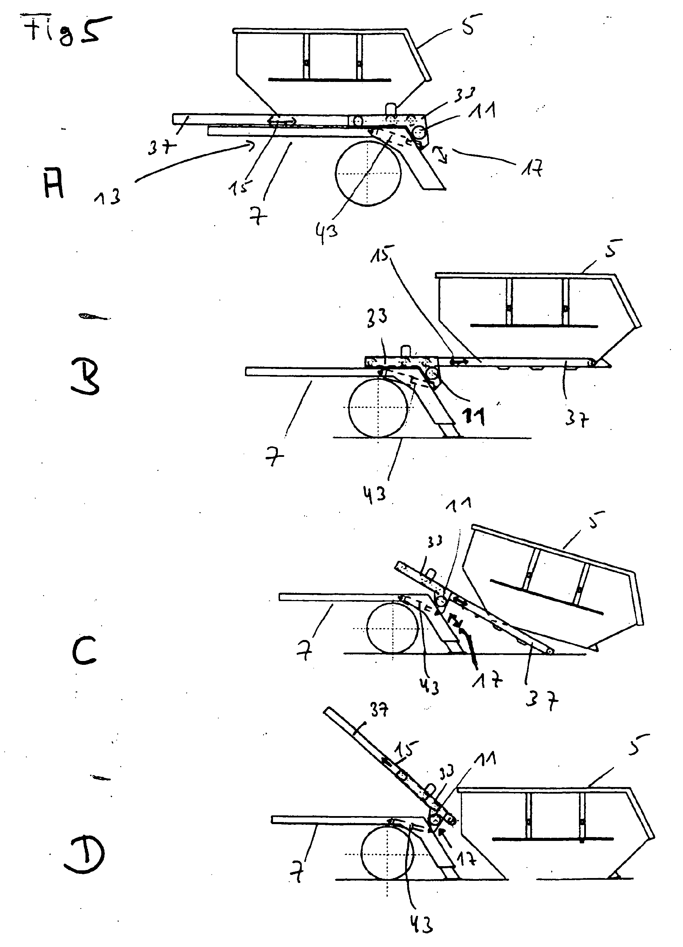

Das Verfahren zum Wechseln der Schüttgut-Mulden 3 und 5 von der Ladefläche des Fahrzeugs auf den Boden außerhalb des Fahrzeugs 1 sowie das Aufladen der Mulde 3 vom Boden auf die Ladefläche 7 des Fahrzeugs 1 werden in Figur 5 ausführlich beschrieben.

Im Folgenden wird davon ausgegangen, dass bei der hier beschriebenen Vorrichtung und bei dem unten erwähnten Verfahren die auf dem Fahrzeug vorhandene Schüttgut-Mulde 5 leer ist und an einen Ort verfahren wird, an dem diese gegen eine volle Schüttgut-Mulde 3 ausgetauscht werden kann, die zunächst auf dem Boden steht und an die das Fahrzeug zum Wechseln der Schüttgut-Mulden 3 und 5 heranfährt.

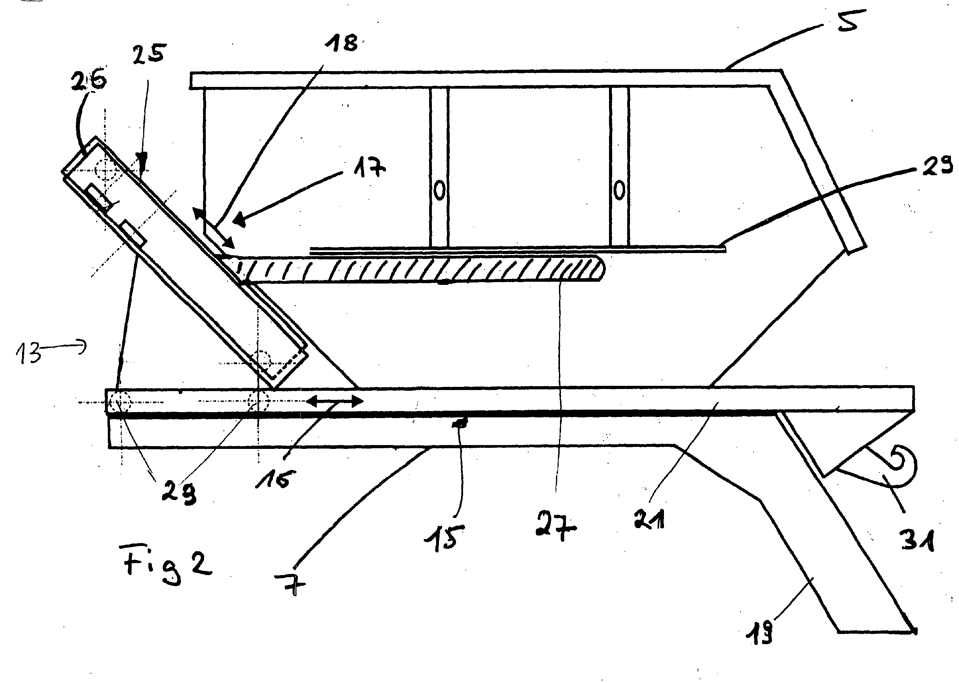

In Figur 2 ist ein Ausführungsbeispiel für eine Verlagerungsvorrichtung 13 einer Schüttgut-Mulde 5, die sich auf der Ladefläche 7 eines Fahrzeugs 1 befindet, gezeigt. Gleiche Teile sind mit gleichen Bezugsziffern versehen, so dass auf die Beschreibung zu Figur 1 verwiesen wird.

In Figur 2 ist aus Gründen der Übersichtlichkeit lediglich die Ladefläche 7 des Fahrzeugs 1 gezeigt. In diesem Ausführungsbeispiel weist die Längsverlagerungsvorrichtung 15, deren Bewegung durch den Pfeil 16 angedeutet ist, eine Führungsschiene 21 mit Führungsrollen 23 auf, wobei die Führungsschiene 21 parallel zur Ladefläche 7 angeordnet ist. Die Höhenverlagerungsvorrichtung 17, deren Bewegung durch den Pfeil 18 angedeutet ist, weist einen Hubmast 25 mit einem inneren Profil 26 auf. Es ist gegenüber der Ladefläche 7 geneigt, vorzugsweise um 45°, und damit an die Kontur der genormten Schüttgut-Mulden angepasst. Mit dem Hubmast 25 sind Längsholme 27 verbunden, die gegenüber dem Profil 26 verlagerbar und als Gabeln ausgeführt sind, vorgesehen. Es befinden sich jeweils zwei Längsholme 27 und 27' an dem Hubmast 25, von denen allerdings in der Figur nur ein dem Betrachter zugewandter Längsholm 27 gezeigt ist. Die Längsholme sind vorzugsweise horizontal angeordnet. Die Schüttgut-Mulde 5 weist standardmäßig angebrachte Leisten 29 und 29' auf, wobei in der Figur nur die dem Betrachter zugewandte Leiste 29 gezeigt ist. Auch diese Leisten 29 und 29' sind vorzugsweise horizontal angeordnet. Die Stellung der Längsholme 27, 27' ist an die der Leisten 29, 29' angepasst. Mit den Längsholmen 27 und 27' treten die Leisten 29 und 29' in Wirkverbindung. Unter Wirkverbindung wird in diesem Zusammenhang verstanden, dass die Längsholme 27 und 27' unter die Leisten 29 und 29' greifen, so dass die Schüttgut-Mulde 5 auf den Längsholmen 27 und 27' ruht, wenn das Profil 26 eine Auf- und Abwärtsbewegung ausführt. Der Abstand der Längsholme 27 und 27' ist verstellbar und ist vorzugsweise an die Breite der Schüttgut-Mulde 5 anzupassen. Vor einer Bewegung der Schüttgut-Mulde 5, sowohl in Längsrichtung als auch in der Höhe, ist die Mulde vorzugsweise zu sichern. Dies geschieht beispielsweise dadurch, dass an den Längsholmen 27 und 27' ein Verriegelungsmechanismus, der in der Figur 2 nicht gezeigt ist, geschlossen wird. Der Verriegelungsmechanismus ist vorzugsweise mittels Nocken, Keilen, hydraulischen oder pneumatischen Zylindern oder Spindeln betätigbar. Es ist auch vorstellbar, dass jede Leiste 29 und 29' einzeln mit den diesen zugeordneten Längsholmen 27 und 27' gesichert wird. Der Abstand zwischen den horizontalen Längsholmen 27 und 27' ist einstellbar, so dass die Schüttgut-Mulde 5 zur Sicherung auch festgeklemmt werden kann. Die Bewegung des Hubmasten 25 auf der Ladefläche 7 entlang der Führungsschienen und die des Profils 26 wird mittels hydraulischer oder pneumatischer Zylinder oder mittels elektrischer oder mechanischer Antriebe mit zugehörigen Kraftübertragungsmitteln durchgeführt, die ebenfalls nicht in der Figur gezeigt sind. Schematisch angedeutet ist noch ein Kipphaken 31.

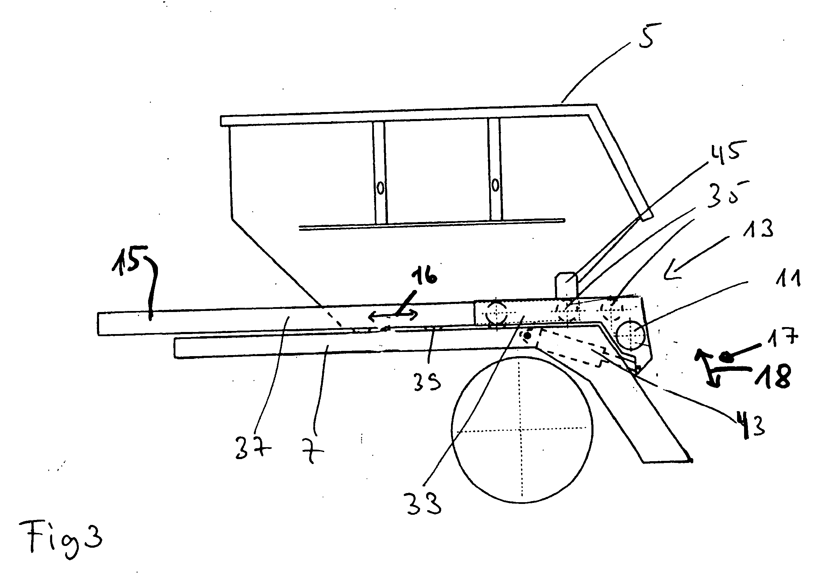

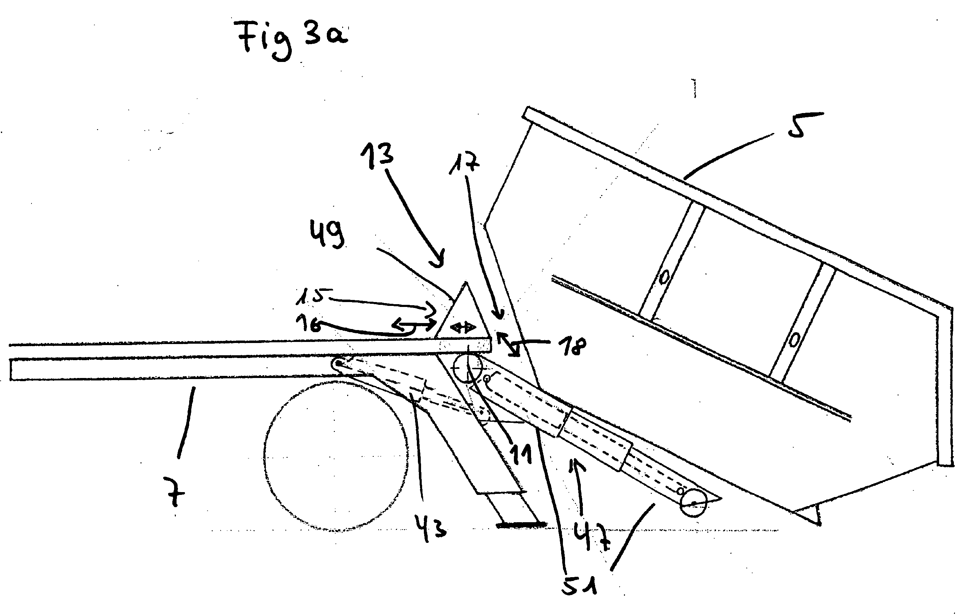

In Figur 3 ist ein zweites Ausführungsbeispiel für eine Verlagerungsvorrichtung 13 gezeigt. Gleiche Teile sind mit gleichen Bezugsziffern versehen. Es sind die Längsverlagerungsvorrichtung 15 und die Höhenverlagerungsvorrichtung 17 zu erkennen. Die Längsverlagerungsvorrichtung 15 weist eine auch als Führungsrollenträger oder -halter bezeichnete Profilschiene 33 auf. Diese ist hier auf der Drehachse 11 der Hubarmvorrichtung 9 schwenkbar gelagert. Denkbar ist es auch, eine andere, von dieser getrennte Drehachse vorzusehen. In der Profilschiene 33 ist ― vorzugsweise mittels Führungsrollen 35 ― eine auch als Führungsprofil bezeichnete Längsschiene 37 bewegbar. Somit umfasst die Längsverlagerungsvorrichtung 15 eine Profilschiene 33 und eine Längsschiene 37. Vorzugsweise wird die Längsschiene 37 parallel zur Ladefläche 7 des Fahrzeuges bewegt, so dass die Längsschiene 37 in eine Position außerhalb der Ladefläche 7 hinter das Fahrzeug bewegt werden kann. Die Längsschiene 37, die auf der einen Seite der Ladefläche 7 des Fahrzeugs 1 angeordnet ist, und eine zweite Längsschiene 37', die in der Figur nicht gezeigt ist, sind mittels mindestens eines Querträgers 39 untereinander verbindbar. Die Längsschienen 37 und 37' bilden mit dem Querträger 39 einen Transportschlitten. Dieser bewirkt eine laterale Aussteifung der Längsschienen 37, 37'. Diese Realisierung führt zu einem relativ einfachen Aufbau der Gesamtkonstruktion.

Es sind hier unterschiedliche Realisierungen möglich: Bei einer ersten Variante sind die Längsschienen 37 und 37' mit dem Querträger 39 fest verbunden und bilden damit zusammen mit diesen den Transportschlitten. Der so realisierte Transportschlitten wird auch als einteiliger Auszug bezeichnet.

Bei einer zweiten Variante läuft innerhalb der Längsschienen 37 und 37' ein separater Transportschlitten, so dass also eine auf dem Transportschlitten untergebrachte Schüttgut-Mulde gegenüber den Längsschienen 37, 37' verfahrbar ist.

Die Höhenverlagerungsvorrichtung 17 umfasst ein Stellelement 43, welches die Schwenkbewegung der Profilschiene 33 um die Drehachse 11 beeinflusst. Anstelle der Drehachse 11 kann auch eine von der Hubarmvorrichtung 9 unabhängige Drehachse gewählt werden. Die Längsverlagerungsvorrichtung 15 weist einen Antriebsmotor 45 auf, mit dem die Längsverlagerung durchgeführt werden kann. Das Stellelement 43 kann sowohl eine Schwenkbewegung der Profilschiene 33 durchführen, als auch die rückläufige Bewegung aus der verschwenkten Lage in die Horizontale. Denkbar ist es auch, einen elektrischen oder mechanischen Antrieb vorzusehen. Die Längsverlagerungsvorrichtung 15 weist vorzugsweise zwei Profilschienen 33 und 33' auf, die jeweils auf gegenüberliegenden Seiten der Ladefläche 7 des Fahrzeuges 1 nahezu parallel angeordnet sind und in denen die Längsschienen 37 und 37' bewegbar sind. In Figur 3 sind nur die Profilschiene 33 und die Längsschiene 37 zu sehen. Die Längsschienen 37 und 37' können einstückig oder aus mehreren teleskopartig aufgebauten Teillängsschienen zusammengesetzt sein.

Falls die Längsschienen 37, 37' aus mehreren teleskopartig aufgebauten Teillängsschienen zusammengesetzt sind, gibt es auch hier zwei Möglichkeiten, den Transportschlitten zu realisieren. Bei einer ersten Variante wird der Transportschlitten dadurch gebildet, dass die innersten, am weitesten ausfahrbaren Teillängsschienen durch Querträger miteinander verbunden sind. Bei einer zweiten Variante ist es möglich, dass innerhalb dieser Teillängsschiene ein gegenüber der Teillängsschiene auf Rollen verfahrbarer Transportschlitten vorgesehen wird, wodurch die Baulänge der Gesamtkonstruktion reduziert wird.

Der Transportschlitten kann seitliche Führungseinrichtungen, beispielsweise Gleitstücke, aufweisen, die eine Versteifung des nach hinten offenen Längsschienenpaares bewirken.

Diese Ausgestaltung des Transportschlittens ist auch bei der oben erwähnten Realisierungsmöglichkeit des Transportschlittens einsetzbar.

Die Schwenkbewegung der Schüttgut-Mulde 5 wird dadurch veranlasst, dass der Schwerpunkt der Schüttgut-Mulde auf der Ladefläche 7 des Fahrzeugs 1 so weit nach hinten verlagert wird, dass er über die Ladefläche 7 hinausgeschoben wird. Die durch die Schwerkraft verursachte Schwenkbewegung wird durch das Stellelement 43 abgebremst, das damit eine so genannte Schwenkbremse bildet. Auf diese Weise ist es möglich, die durch die Schwerpunktverlagerung im Laufe der Längsverlagerung auftretenden Kippkräfte so abzufangen, dass eine gesteuerte Schwenk-/Kippbewegung der Schüttgut-Mulde erreicht wird.

Diese Wirkung des Stellelements 43 wird nicht nur bei der in Figur 3 dargestellten Vorrichtung ausgenutzt, sondern auch bei der Vorrichtung nach Figur 3a. Bei den Vorrichtungen nach den Figuren 3a und 3 wird durch das Stellelement 43 eine aktive Beeinflussung des Bewegungsablaufs der Schüttgut-Mulde 5 möglich, insbesondere dann, wenn das Stellelement 43 steuerbare Hydraulik- oder Pneumatikzylinder aufweist, oder einen mechanischen oder elektrischen Antrieb.

Vorzugsweise weist die Verlagerungsvorrichtung zusätzliche Sicherungseinrichtungen auf, die hier in der Figur allerdings nicht dargestellt sind, die die Mulde bei der auch als Kippbewegung bezeichnete Schwenkbewegung am Herunterrutschen hindern.

In Figur 3a ist ein drittes Ausführungsbeispiel für eine Verlagerungsvorrichtung 13 gezeigt. Gleiche Teile sind mit gleichen Bezugsziffern versehen. Es sind die Längsverlagerungsvorrichtung 15 und die Höhenverlagerungsvorrichtung 17 gezeigt. Die Längsverlagerungsvorrichtung 15 weist eine auch als Ausleger bezeichnete Teleskoparmvorrichtung 47 und ein Verschiebemittel 49 auf, das dazu dient, die Schüttgut-Mulde auf dem Fahrzeug 1 nach hinten zu verschieben. Die Teleskoparmvorrichtung 47 ist schwenkbar mit der Drehachse 11 der Hubarmvorrichtung 9 verbunden. Die Teleskoparmvorrichtung 47 umfasst mehrere ineinander verschiebbare Teilteleskoparme 51. Sie bildet quasi eine Verlängerung der Ladefläche 7.

In Figur 3a sind drei Teilteleskoparme 51 zu erkennen. Die Teleskoparmvorrichtung 47 bildet praktisch eine horizontale Verlängerung der Längsverlagerungsvorrichtung 15, während die Schüttgut-Mulde 5 von dem Verschiebemittel 49 in Figur 3a nach rechts verlagert wird. Nach Überführung der Schüttgut-Mulde 5 auf die Teleskoparmvorrichtung 47 wird letztere nach unten verschwenkt.

Diese Teleskoparmvorrichtung 47 ist im bereits geschwenkten Zustand in Figur 3a gezeigt, so dass eine schiefe Ebene gebildet wird. Das Verschiebemittel 49 kann ein motorgetriebenes Verschiebemittel sein. Die Höhenverlagerungsvorrichtung 17 umfasst, wie bereits in Figur 3 beschrieben, ein Stellelement 43, welches vorzugsweise mit der Längsverlagerungsvorrichtung 15 zusammenwirkt und die Schwenkbewegung der Teleskoparmvorrichtung 47 um die Drehachse 11 realisiert. Das Stellelement 43 realisiert sowohl eine Schwenkbewegung der Teleskoparmvorrichtung 47, als auch die rückläufige Bewegung aus der verschwenkten Lage in die Horizontale.

Das Stellelement 43 kann sowohl pneumatisch als auch hydraulisch betätigbar sein, es kann aber auch einen elektrischen oder mechanischen Antrieb aufweisen. In der Figur ist die Teleskoparmvorrichtung 47 in bereits um die Drehachse 11 geschwenkter Position dargestellt. Auch hier kann eine von der Drehachse 11 getrennte Drehachse vorgesehen werden.

Nach dem Absetzen der Schüttgut-Mulde werden die Teilteleskoparme 51 wieder eingefahren und in eine nahezu vertikale Stellung gegenüber der Ladefläche 7 verschwenkt. Außerdem wird das Verschiebemittel 49 nach links in seine Ausgangsposition zurückverlagert.

Bei einer Verlagerung der Schüttgut-Mulde 5 auf der Ladefläche 7 eines Fahrzeugs 1 bei den in den Figuren 3 und 3a dargestellten Vorrichtungen ist vorzugsweise vorgesehen, dass die Schüttgut-Mulde 5 etwas angehoben wird, also nicht auf der Ladefläche schleift. Dies kann durch Anlaufschrägen auf der Ladefläche erreicht werden, auf denen Rollen laufen.

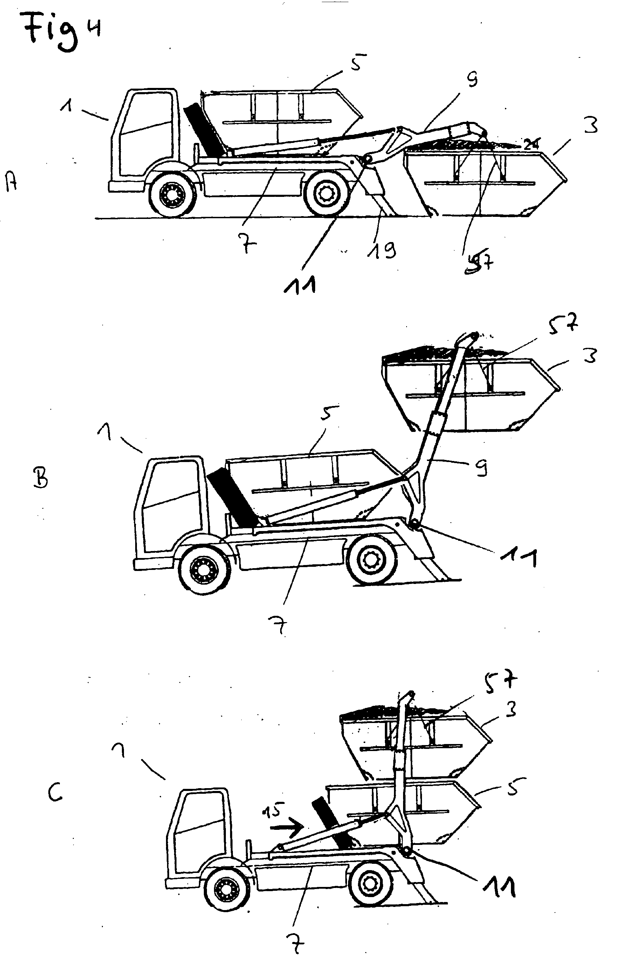

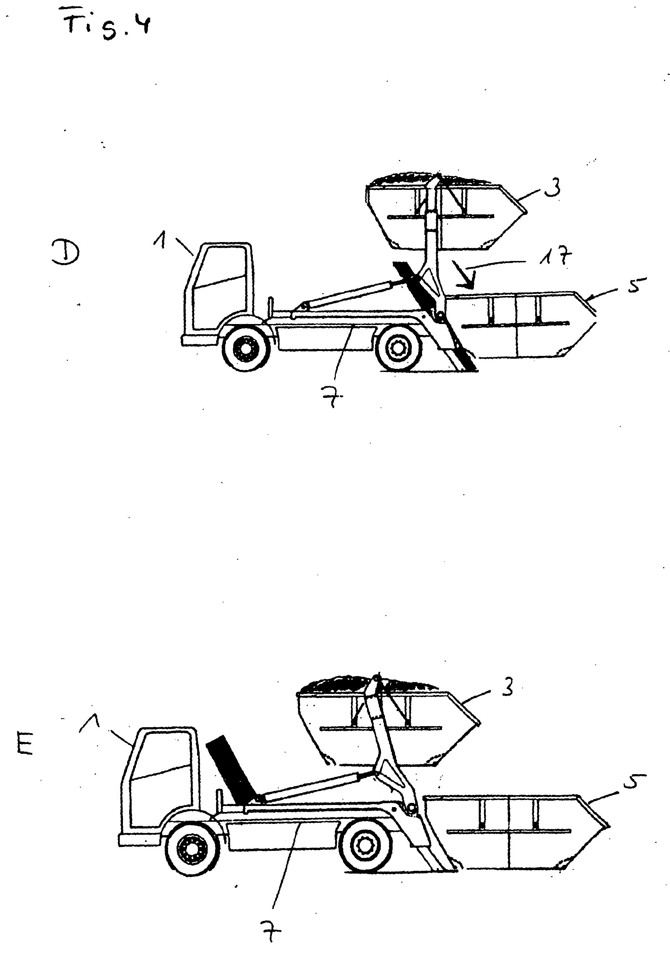

In Figur 4 ist das Wechseln von Schüttgut-Mulden 3 und 5 in fünf Teilfiguren A bis E gezeigt. In der Ausgangsposition befindet sich eine erste Schüttgut-Mulde 3 außerhalb der Ladefläche 7 des Fahrzeuges 1 und eine zweite Mulde 5 auf der Ladefläche 7 des Fahrzeugs 1. In einem ersten Verfahrensschritt fährt das Fahrzeug 1 an die Schüttgut-Mulde 3 heran. Bevorzugt werden die Stützeinrichtungen 19 ausgefahren, so dass das Fahrzeug 1 einen sicheren Stand erhält, insbesondere so, dass das Fahrzeug 1 parallel zum Untergrund steht. In Figur 4A befindet sich das Fahrzeug 1 bereits in an die Schüttgut-Mulde 3 herangefahrener Position. Mit der Hubarmvorrichtung 9 wird die Mulde 3 beispielsweise mittels eines standardmäßigen Kettengehänges 57 aufgenommen und gesichert. In dem nächsten Verfahrensschritt, dargestellt in Figur 4B, wird die Schüttgut-Mulde 3 mittels der Hubarmvorrichtung 9 angehoben, und zwar so hoch, dass die Schüttgut-Mulde 5 unterhalb der Schüttgut-Mulde 3 hindurchbewegt werden kann, also in eine Freigabeposition. Im Verfahrensschritt 4C wird die Schüttgut-Mulde 5 mittels der Längsverlagerungsvorrichtung 15 in eine Position außerhalb der Ladefläche 7 des Fahrzeugs 1 verlagert. Die Höhenverlagerungsvorrichtung 17 setzt die Schüttgut-Mulde 5 gemäß Figur 4D auf dem Boden hinter dem Fahrzeug 1 ab. Die Längsverlagerungsvorrichtung 15 und die Höhenverlagerungsvorrichtung 17 werden in ihre Ausgangsposition zurückgefahren. Im Verfahrensschritt 4E wird die Schüttgut-Mulde 3 auf die Ladefläche 7 des Fahrzeugs 1 abgesetzt.

In Figur 5 ist die Verlagerungsvorrichtung 13 des in Figur 3 dargestellten Ausführungsbeispiels mit den verschiedenen Positionen der Längsverlagerungsvorrichtung 15 und der Höhenverlagerungsvorrichtung 17 gezeigt. Figur 5A zeigt den Ausgangszustand des Wechselvorgangs, wobei lediglich die zweite Schüttgut-Mulde 5 und die Verlagerungsvorrichtung 13 auf der Ladefläche 7 gezeigt sind. Die Hubarmvorrichtung 9 und die erste Schüttgut-Mulde hinter dem Fahrzeug 1 sind nicht dargestellt. Die zweite Schüttgut-Mulde 5 ist auf der Ladefläche 7 des Fahrzeugs 1, das in der Figur nicht gezeigt ist, angeordnet. In Figur 5B ist die Längsschiene 37 der Längsverlagerungsvorrichtung 15, und damit die Schüttgut-Mulde, in eine Position hinter der Ladefläche 7, verlagert. Dabei wurde die Höhe der Ladefläche 7 nicht verändert. In Figur 5C ist mittels des Stellelements 43 die Längsverlagerungsvorrichtung 15 um die Drehachse 11 geschwenkt worden, so dass die Profilschiene 33 und die Längsschiene 37 in eine gekippte Position gebracht wurden. Die Schüttgut-Mulde 5 kann jetzt mit Hilfe der entstandenen schiefen Ebene auf dem Boden abgesetzt werden. Wird die Schüttgut-Mulde hinter dem Fahrzeug abgesetzt, so verschwenkt sie um einen Drehpunkt und kommt zunächst mit ihrem hinteren Ende am Boden auf. Um ein Abrutschen zu verhindern, kann eine Sicherungseinrichtung vorgesehen werden, die beispielsweise eine Klemmeinrichtung umfasst. Diese kann einen Sicherungshaken oder -krallen aufweisen. Denkbar ist es aber auch, diese pneumatisch, hydraulisch, elektrisch oder mechanisch zu betätigen.

In Figur 5D ist zu sehen, wie die Längsverlagerungsvorrichtung 15 mittels des Stellelements 43 der Höhenverlagerungsvorrichtung 17 wieder hochgefahren wird. Durch Schwenken um die Drehachse 11 kann als Nächstes, hier in der Figur allerdings nicht gezeigt, die Längsverlagerungsvorrichtung 15 gegen den Uhrzeigersinn nach unten geschwenkt werden, so dass sie sich dann wieder auf der Ladefläche 7 des Fahrzeugs, also in der Ausgangsposition befindet.

## Patentansprüche

1. Vorrichtung zum Wechseln von Schüttgut-Mulden (3,5) mit einer einer ersten Schüttgut-Mulde (3) zugeordneten Hubarmvorrichtung (9), die eine an einem Fahrzeug (1) angeordnete Drehachse (11) aufweist, und einer einer zweiten Schüttgut-Mulde (5) zugeordneten Verlagerungsvorrichtung (13), wobei die erste Schüttgut-Mulde (3) sich außerhalb einer Ladefläche (7) des Fahrzeugs (1) befindet und die zweite Schüttgut-Mulde (5) sich auf der Ladefläche (7) des Fahrzeuges befindet, wobei die Verlagerungsvorrichtung (13) eine Längsverlagerungsvorrichtung (15) und eine Höhenverlagerungsvorrichtung (17) aufweist, die unabhängig voneinander steuerbar sind, **dadurch gekennzeichnet, dass** die Längsverlagerungsvorrichtung (15) mindestens eine Profilschiene (33) und mindestens eine Längsschiene (37) aufweist, und die Höhenverlagerungsvorrichtung (17) ein vorzugsweise mit der Längsverlagerungsvorrichtung (15) zusammenwirkendes Stellelement (43) aufweist, mittels dessen die Profilschiene (33) und die Längsschiene (37) um die Drehachse (11) der Hubarmvorrichtung (9) oder um eine separate Drehachse schwenkbar ist.

2. Vorrichtung nach Anspruch 1, **dadurch gekennzeichnet, dass** die Verlagerungseinrichtung (13) mindestens zwei Profilschienen (33,33') und mindestens zwei Längsschienen (37,37') aufweist, wobei jeweils eine Profilschiene (33,33') und eine Längsschiene (37,37') an jeder Längsseite der Ladefläche (7) des Fahrzeugs (1) angeordnet ist und die beiden Profilschienen (33,33') mit der Drehachse (11) des Hubarms (9) schwenkbar verbunden sind.

3. Vorrichtung nach Anspruch 1 oder Anspruch 2, **dadurch gekennzeichnet, dass** jeweils die Längsschiene (37) in der Profilschiene (33) und die Längsschiene (37') in der Profilschiene (33') entlang der Ladefläche (7) verlagerbar ist.

4. Vorrichtung nach einem der Ansprüche 1 bis 3, **dadurch gekennzeichnet, dass** mindestens zwei Längsschienen (37,37') mit mindestens einem Querträger (39) verwindungssicher verbunden sind und einen Transportschlitten bilden.

5. Vorrichtung nach einem der vorhergehenden Ansprüche 1 bis 4, **dadurch gekennzeichnet, dass** entlang der Längsschiene ein separater Transportschlitten verfahrbar ist.

6. Vorrichtung nach Anspruch 1 bis 5, **dadurch gekennzeichnet, dass** die Längsschienen (37,37') teleskopartig ausfahrbar sind und die jeweils innerste Längsschiene (37,37') mit dem Querträger (39) den Transportschlitten bildet.

7. Vorrichtung nach Anspruch 1, **dadurch gekennzeichnet, dass** die Längsverlagerungsvorrichtung (15) eine Teleskoparmvorrichtung (47) und ein Verschiebemittel (49) umfasst.

8. Vorrichtung nach Anspruch 7, **dadurch gekennzeichnet, dass** die Höhenverlagerungsvorrichtung (17) ein vorzugsweise mit der Längsverlagerungsvorrichtung (15) zusammenwirkendes Stellelement (43) aufweist, mittels dessen die Teleskoparmvorrichtung (47) um die Drehachse (11) der Hubarmvorrichtung (9) oder um eine separate Drehachse schwenkbar ist.

## Claims

1. Device for changing skips (3, 5), with a lifting arm device (9) which is assigned to a first skip (3) and has a pivot (11) arranged on a vehicle (1), and with a displacement device (13) assigned to a second skip (5), wherein the first skip (3) is located outside a loading surface (7) of the vehicle (1) and the second skip (5) is located on the loading surface (7) of the vehicle, and wherein the displacement device (13) has a longitudinal displacement device (15) and a vertical displacement device (17) which can be controlled independently of each other, **characterized in that** the longitudinal displacement device (15) has at least one profiled rail (33) and at least one longitudinal rail (37), and the vertical displacement device (17) has an actuating element (43) which preferably interacts with the longitudinal displacement device (15) and by means of which the profiled rail (33) and the longitudinal rail (37) can be pivoted about the pivot (11) of the lifting arm device (9) or about a separate pivot.

2. Device according to Claim 1, **characterized in that** the displacement device (13) has at least two profiled rails (33, 33') and at least two longitudinal rails (37, 37'), one profiled rail (33, 33') and one longitudinal rail (37, 37') being arranged on each longitudinal side of the loading surface (7) of the vehicle (1) and the two profiled rails (33, 33') being connected pivotably to the pivot (11) of the lifting arm (9).

3. Device according to Claim 1 or Claim 2,
**characterized in that** the longitudinal rail (37) can be displaced along the loading surface (7) in the profiled rail (33) and the longitudinal rail (37') can be displaced therealong in the profiled rail (33').

4. Device according to one of Claims 1 to 3,
**characterized in that** at least two longitudinal rails (37, 37') are connected in a torsion-proof manner by means of at least one transverse support (39) and form a transport slide.

5. Device according to one of the preceding Claims 1 to 4, **characterized in that** a separate transport slide is movable along the longitudinal rail.

6. Device according to Claims 1 to 5, **characterized in that** the longitudinal rails (37, 37') can be extended telescopically and the innermost longitudinal rail (37, 37') in each case together with the transverse support (39) forms the transport slide.

7. Device according to Claim 1, **characterized in that** the longitudinal displacement device (15) comprises a telescopic arm device (47) and a sliding means (49).

8. Device according to Claim 7, **characterized in that** the vertical displacement device (17) has an actuating element (43) which preferably interacts with the longitudinal displacement device (15) and by means of which the telescopic arm device (47) can be pivoted about the pivot (11) of the lifting arm device (9) or about a separate pivot.

## Revendications

1. Dispositif pour échanger des bennes (3, 5) avec un dispositif de bras de levage (9) associé à une première benne (3), qui comprend un axe de rotation (11) disposé sur un véhicule (1), et un dispositif de déplacement (13) associé à une seconde benne (5), dans lequel la première benne (3) se trouve à l'extérieur d'une surface de chargement (7) du véhicule (1) et la seconde benne (5) se trouve sur la surface de chargement (7) du véhicule, dans lequel le dispositif de déplacement (13) comporte un dispositif de déplacement en longueur (15) et un dispositif de déplacement en hauteur (17), qui peuvent être commandés indépendamment l'un de l'autre, **caractérisé en ce que** le dispositif de déplacement en longueur (15) présente au moins un rail profilé (33) et au moins un rail longitudinal (37), et le dispositif de déplacement en hauteur (17) présente un élément de commande (43) coopérant de préférence avec le dispositif de déplacement en longueur (15), et au moyen duquel le rail profilé (33) et le rail longitudinal (37) peuvent pivoter autour de l'axe de rotation (11) du dispositif de bras de levage (9) ou autour d'un axe de rotation séparé.

2. Dispositif selon la revendication 1,
**caractérisé en ce que** le dispositif de déplacement (13) présente au moins deux rails profilés (33, 33') et au moins deux rails longitudinaux (37, 37'), dans lequel un rail profilé (33, 33') et un rail longitudinal (37, 37') sont chaque fois disposés sur chaque côté longitudinal de la surface de chargement (7) du véhicule (1) et les deux rails profilés (33, 33') sont reliés de façon pivotante à l'axe de rotation (11) du bras de levage (9).

3. Dispositif selon la revendication 1 ou 2,
**caractérisé en ce que** le rail longitudinal (37) est déplaçable dans le rail profilé (33) et le rail longitudinal (37') est déplaçable dans le rail profilé (33') respectivement, le long de la surface de chargement (7).

4. Dispositif selon l'une quelconque des revendications 1 à 3, **caractérisé en ce qu'**au moins deux rails longitudinaux (37, 37') sont assemblés sans torsion à au moins une traverse (39) et forment un chariot de transport.

5. Dispositif selon l'une quelconque des revendications précédentes 1 à 4, **caractérisé en ce qu'**un chariot de transport séparé est déplaçable le long du rail longitudinal.

6. Dispositif selon les revendications 1 à 5,
**caractérisé en ce que** les rails longitudinaux (37, 37') sont extensibles de manière télescopique et le rail longitudinal le plus intérieur (37, 37') forme avec la traverse (39) le chariot de transport.

7. Dispositif selon la revendication 1,
**caractérisé en ce que** le dispositif de déplacement en longueur (15) comprend un dispositif de bras télescopique (47) et un moyen de déplacement (49).

8. Dispositif selon la revendication 7,
**caractérisé en ce que** le dispositif de déplacement en hauteur (17) présente un élément de commande (43) coopérant de préférence avec le dispositif de déplacement en longueur (15) et au moyen duquel le dispositif de bras télescopique (47) peut pivoter autour de l'axe de rotation (11) du dispositif de bras de levage (9) ou autour d'un axe de rotation séparé.
